(19) Europäisches Patentamt
European Patent Office
Office européen des brevets

(11) **EP 3 418 697 A1**

(12) **EUROPÄISCHE PATENTANMELDUNG**

(43) Veröffentlichungstag:
**26.12.2018 Patentblatt 2018/52**

(51) Int Cl.:
***G01F 1/66*** *(2006.01)*          *G01F 25/00* *(2006.01)*

(21) Anmeldenummer: **17177639.6**

(22) Anmeldetag: **23.06.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **FLEXIM FLEXIBLE INDUSTRIEMESSTECHNIK GMBH**
**12681 Berlin (DE)**

(72) Erfinder: **Funck, Bernhard**
**18059 Rostock (DE)**

(74) Vertreter: **Garrels, Sabine**
**Schnick & Garrels**
**Patentanwälte**
**Schonenfahrerstrasse 7**
**18057 Rostock (DE)**

(54) **VORRICHTUNG UND VERFAHREN ZUR ULTRASCHALL-DURCHFLUSSMESSUNG**

(57)     Die Erfindung betrifft ein Verfahren und eine Anordnung zur Ultraschall-Durchflussmessung nach dem Laufzeitverfahren.

Aufgabe der Erfindung ist es, ein Verfahren für eine von der Viskosität unabhängige, genaue und eingriffsfreie Durchflussmessung zu entwickeln. Weiterhin ist es die Aufgabe, eine anwendbare Vorrichtung für das Verfahren zu beschreiben.

Die erfindungsgemäße Vorrichtung zur Ultraschall-Durchflussmessung hat wenigstens ein erstes Schallwandlerpaar, das jeweils aus einem im Sendebetrieb und einem im Empfangsbetrieb arbeitenden Clamp-on-Ultraschallwandler besteht. Der Querschnitt eines von einem gasförmigen oder flüssigen Medium durchströmten Messrohres ist im Wesentlichen ein Fünfeck mit einer Grundseite und mit jeweils im rechten Winkel angrenzenden Seiten sowie daran angrenzende, der Grundseite gegenüberliegende Seiten, welche einen Winkel kleiner als 180° einschließen. Das wenigstens eine erste Schallwandlerpaar ist auf der Grundseite zur Erzeugung erster Schallpfade angeordnet. Erfindungsgemäß ist wenigstens ein zweites Schallwandlerpaar angeordnet, wodurch ein oder mehrere zusätzliche Schallpfade erzeugt werden.

Figur 4a

Figur 4b

Figur 4c

Figur 4d

Figur 4

EP 3 418 697 A1

**Beschreibung**

Die Erfindung befasst sich mit einer Vorrichtung und einem Verfahren zur Ultraschall-Durchflussmessung.

Ultraschall-Durchflussmessgeräte finden breiten Einsatz in vielen Bereichen der Industrie. Bei der Ultraschall-Durchflussmessung nach dem Laufzeitverfahren wird die Differenz zweier sich in bzw. gegen die Strömung ausbreitender Schallsignale gemessen und daraus der Volumenstrom berechnet. Die Messung kann mit einem oder mehreren Messpfaden (Schallpfaden) erfolgen. Ein Messpfad wird dabei aus zwei Schallwandlern gebildet, die beide jeweils als Sender und als Empfänger betrieben werden können. Die mittlere Strömungsgeschwindigkeit VI auf dem Schallpfad wird aus der Differenz Δt der Laufzeiten, dem Laufzeitanteil tl im Fluid sowie einer werkseitig bestimmten Sensorkonstante Ka ermittelt:

$$VI = Ka *(\Delta t/2tl) \qquad\qquad Gl.\ (1)$$

Der Durchfluss Q ergibt sich aus dem Pfadmittelwert VI, der Querschnittsfläche A des Rohres und dem strömungsmechanischen Kalibrierfaktor KF zu

$$Q = KF*A*VI \qquad\qquad Gl.\ (2)$$

Der Kalibrierfaktor KF berechnet sich aus dem Verhältnis des Pfadmittelwertes VI zum Flächenmittelwert der Strömungsgeschwindigkeit VA:

$$KF = VA/VI \qquad\qquad Gl.\ (3)$$

Die Messung kann eingriffsfrei erfolgen, indem die Schallwandler von außen auf das Rohr aufgesetzt werden. Bei Rohren mit kreisförmigem Querschnitt ist diese Messanordnung jedoch auf diametrale Messpfade eingeschränkt. Der strömungsmechanische Kalibrierfaktor KF ist dann insbesondere im laminar-turbulenten Übergangsbereich der Strömung stark von der Reynoldszahl und den Einlaufbedingungen abhängig. In DE 19808642 C1 wird eine Anordnung mit eingriffsfreien Schallwandlern vorgeschlagen, die einen vom Strömungsprofil weitgehend unabhängigen Messeffekt ermöglicht. Durch Verwendung eines Messrohres mit fünfeckigem Querschnitt wird ein Schallpfadverlauf erzielt, bei dem der Pfadmittelwert VI annähernd gleich dem Flächenmittelwert VA ist, sodass der strömungsmechanische Kalibrierfaktor KF unabhängig von der Reynoldszahl und den Einlaufbedingungen ungefähr KF = 1 ist. Dies gilt jedoch nur näherungsweise. Auch diese Anordnung zeigt eine, wenn auch geringe, Abhängigkeit von der Reynoldszahl. Die Funktion des strömungsmechanischen Kalibrierfaktors KF von der Reynoldszahl kann im Werk durch Kalibrierung ermittelt und im Rechenwerk des Messumformers hinterlegt werden. Während des Betriebes kann diese Funktion benutzt werden, um den Messwert zu korrigieren. Da die Reynoldszahl von der Viskosität abhängt, muss diese während der Messung bekannt sein. Bei vielen Medien, insbesondere z.B. bei Kohlenwasserstoffen, ist die Viskosität aber nur ungenügend genau bekannt.

Eine Möglichkeit zur Messung der Reynoldszahl beschreibt US 2015260558 A1. Die Reynoldszahl und die Viskosität werden aus dem Profilfaktor einer Vier-Pfadanordnung ermittelt. Dazu wird mit Hilfe eines Flowconditioners und eines Reducers zunächst ein symmetrisches Profil erzeugt, damit der Profilfaktor ausschließlich von der Reynoldszahl und nicht von eventuellen Vorstörungen abhängt. Die Lösung eignet sich nicht zur eingriffsfreien Messung.

**Darstellung der Erfindung**

Aufgabe der Erfindung ist es, ein Verfahren für eine von der Viskosität unabhängige, genaue und eingriffsfreie Durchflussmessung zu entwickeln. Weiterhin ist es die Aufgabe, eine anwendbare Vorrichtung für das Verfahren zu beschreiben.

Erfindungsgemäß wird diese Aufgabe durch die in den Patentansprüchen aufgeführten Merkmale gelöst. Vorteilhafte Ausführungen sind in den abhängigen Ansprüchen beschrieben.

Die erfindungsgemäße Vorrichtung zur Ultraschall-Durchflussmessung hat wenigstens ein erstes Schallwandlerpaar, das jeweils aus einem im Sendebetrieb und einem im Empfangsbetrieb arbeitenden Clamp-on-Ultraschallwandler besteht. Der Querschnitt eines von einem gasförmigen oder flüssigen Medium durchströmten Messrohres ist im Wesentlichen ein Fünfeck mit einer Grundseite und mit jeweils im rechten Winkel angrenzenden Seiten sowie daran angrenzende, der Grundseite gegenüberliegende Seiten, welche einen Winkel kleiner als 180° einschließen. Das wenigstens eine erste Schallwandlerpaar ist auf der Grundseite zur Erzeugung erster Schallpfade angeordnet. Erfindungsgemäß ist wenigstens ein zweites Schallwandlerpaar angeordnet, wodurch ein oder mehrere zusätzliche Schallpfade erzeugt werden. Das wenigstens zweite Schallwandlerpaar ist auf einer oder beiden der an die Grundseite angrenzenden Seiten angeordnet.

Die Aufgabe wird weiterhin gelöst durch eine Vorrichtung zur Ultraschall-Durchflussmessung mit wenigstens einem ersten Schallwandlerpaar, das jeweils aus einem im Sendebetrieb und einem im Empfangsbetrieb arbeitenden Clamp-on-Ultraschallwandler besteht. Der Querschnitt eines von einem gasförmigen oder flüssigen Medium durchströmten Messrohres ist im Wesentlichen ein Fünfeck mit einer Grundseite und mit jeweils im rechten Winkel angrenzenden Seiten sowie daran angrenzende, der Grundseite gegenüberliegende Seiten, welche einen Winkel kleiner als 180° einschließen, wobei das wenigstens eine erste Schallwandlerpaar auf der Grundseite zur Erzeugung erster Schallpfade angeordnet ist. Eine der Grundseite gegenüberliegende Ecke zwischen den der Grundseite gegenüberliegenden Seiten ist abgeflacht und bildet einen Reflektor, so dass das Schallwandlerpaar, das den ersten Schallpfad realisiert auch einen zweiten Schallpfad realisiert, welcher zwischen den Schallwandlern auf der Grundseite und der abgeflachten Ecke verläuft.

In einer Ausführungsform ist wenigstens ein zweites Schallwandlerpaar auf der Grundseite dem Reflektor gegenüber liegend angeordnet.

Das erfindungsgemäße Verfahren zur Ultraschall-Durchflussmessung hat wenigstens ein erstes Schallwandlerpaar, das jeweils aus einem im Sendebetrieb und einem im Empfangsbetrieb arbeitenden Clamp-on-Ultraschallwandler besteht. Der Querschnitt eines von einem gasförmigen oder flüssigen Medium durchströmten Messrohres ist im Wesentlichen ein Fünfeck mit einer Grundseite und mit jeweils im rechten Winkel angrenzenden Seiten sowie daran angrenzende, der Grundseite gegenüberliegende Seiten, welche einen Winkel kleiner als 180° einschließen. Das wenigstens eine erste Schallwandlerpaar ist auf der Grundseite zur Erzeugung erster Schallpfade angeordnet. Ein oder mehrere zusätzliche Schallpfade werden durch wenigstens ein zweites Schallwandlerpaar erzeugt. Eine Funktion $F\_Re(K\_VL)$ ist im Rechenwerk des Messumformers hinterlegt, welche eine Reynoldszahl in Abhängigkeit vom Verhältnis $K\_VL$ einer auf dem ersten Schallpfad ermittelten mittleren ersten Strömungsgeschwindigkeit zu einer auf dem zweiten Schallpfad ermittelten mittleren zweiten Strömungsgeschwindigkeit darstellt.

Für den ersten Schallpfad ist eine Funktion $KF1(Re)$ hinterlegt, die ein Verhältnis eines Flächenmittelwertes einer Strömung im Messrohr zur auf dem ersten Schallpfad ermittelten Strömungsgeschwindigkeit in Abhängigkeit von der Reynoldszahl darstellt.

Für eine Ausführungsform ist ein Algorithmus implementiert, welcher mit einer Funktion $F\_Re(K\_VL)$ aus den auf dem ersten und zweiten Schallpfad ermittelten Strömungsgeschwindigkeiten die Reynoldszahl berechnet und damit einen strömungsmechanischen Kalibrierfaktor $KF1(Re)$ und einen Durchfluss $Q = KF1*A*VI$ berechnet. Über eine Funktion $vis = VA * Di /Re$ wird aus der Reynoldszahl Re eine Viskosität vis berechnet.

Die Aufgabe wird auch gelöst durch ein Verfahren zur Ultraschall-Durchflussmessung mit wenigstens einem ersten Schallwandlerpaar, das jeweils aus einem im Sendebetrieb und einem im Empfangsbetrieb arbeitenden Clamp-on-Ultraschallwandler besteht, wobei der Querschnitt eines von einem gasförmigen oder flüssigen Medium durchströmten Messrohres im Wesentlichen ein Fünfeck ist mit einer Grundseite und mit jeweils im rechten Winkel angrenzenden Seiten sowie daran angrenzende, der Grundseite gegenüberliegende Seiten, welche einen Winkel kleiner als 180° einschließen, wobei das wenigstens eine erste Schallwandlerpaar auf der Grundseite zur Erzeugung erster Schallpfade angeordnet ist. Erfindungsgemäß werden ein oder mehrere zusätzliche Schallpfade durch wenigstens ein zweites Schallwandlerpaar erzeugt. Eine Funktion $KF1(K\_VL)$ ist im Rechenwerk des Messumformers hinterlegt, welche den strömungsmechanischen Kalibrierfaktor in Abhängigkeit vom Verhältnis $K\_VL$ der auf dem ersten Schallpfad ermittelten ersten Strömungsgeschwindigkeit zu der auf dem zweiten Schallpfad ermittelten zweiten Strömungsgeschwindigkeit darstellt.

Ein Algorithmus mit der Funktion $KF1(K\_VL)$ aus den auf dem ersten und zweiten Schallpfad ermittelten Strömungsgeschwindigkeiten berechnet den strömungsmechanischen Kalibrierfaktor $KF1$ und den Durchfluss $Q = KF1*A*VI$.

## Ausführung der Erfindung

Nachfolgend wird die Erfindung anhand von Ausführungsbeispielen näher erläutert. Es zeigen:

Figur 1: Seitenansicht des Messrohres mit Ultraschallwandlern und Schallpfad S1 nach dem Stand der Technik,
Figur 2: Querschnitt des Messrohres in der Ebene des Schallwandlerpaars T1 und ausgewählte Teilschallpfade des Schallpfades S1, in die Ebene des Schallwandlerpaars T1 projiziert nach dem Stand der Technik,
Figur 3: Querschnitt des Messrohres in der Ebene des Schallwandlerpaars T1 und Schallpfad S1 der gesamten Wellenfront nach dem Stand der Technik,
Figur 4a: Querschnitt des Messrohres in der Ebene des Schallwandlerpaars T2 und Schallpfad S2 in Reflexanordnung, in die Ebene des Schallwandlerpaars T2 projiziert,

Figuren 4b bis d: verschiedene Ansichten zur besseren Veranschaulichung,

Figur 5a: Querschnitt des Messrohres in der Ebene des Schallwandlerpaars T2 und Schallpfad S2 in Direktanordnung, in die Ebene des Schallwandlerpaars T2 projiziert,

Figuren 5b bis d: verschiedene Ansichten zur besseren Veranschaulichung,

Figur 6: Querschnitt des Messrohres in der Ebene des Schallwandlerpaars T2 und Schallpfad S2 in Reflexanordnung mit Schallwandleranordnung auf der Grundseite, in die Ebene des Schallwandlerpaars T2 projiziert,

Figur 7: Querschnitt des Messrohres in der Ebene des Schallwandlerpaars T1 und Schallpfad S2 in Reflexanordnung wobei das Schallwandlerpaar T1 sowohl den Schallpfad S1 als auch den Schallpfad S2 erzeugt, in die Ebene des Schallwandlerpaars T2 projiziert.

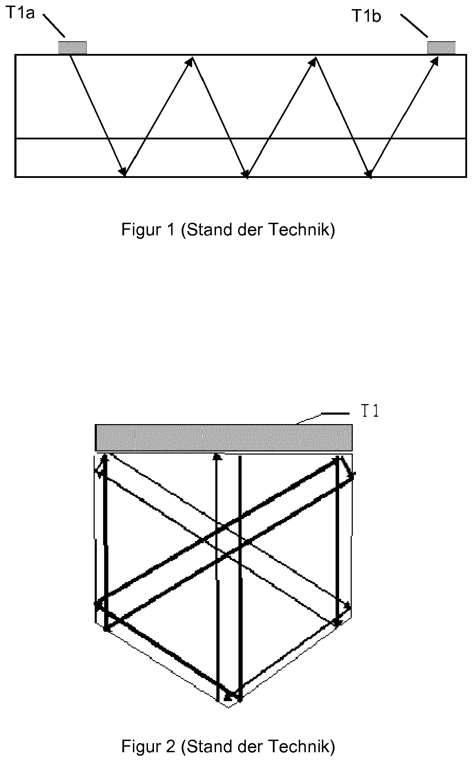

In Figur 1 wird die aus DE 19808642 C1 bekannte Messanordnung gezeigt. Der Schall wird von dem Schallwandler T1a des Schallwandlerpaars T1 in die Rohrwand eingekoppelt, durchläuft die Rohrwand und tritt ins Fluid ein. Nach mehrfacher Reflexion an der Rohrinnenwand wird der Schall über die Rohrwand ausgekoppelt und erreicht den Schallwandler T1b.

Die Dimensionierung der Querschnittsform des Messrohres M erfolgt mit dem Ziel, dass der gesamte Querschnitt des Messrohres M gleichmäßig beschallt wird und die Teilschallpfade der einzelnen Anteile der Wellenfront möglichst weitgehend äquivalente Bereiche des Fluids durchlaufen. Der Querschnitt ist ein Fünfeck, bei dem die Schallwandler T1a, T1b auf der im Folgenden als Grundseite 1 bezeichneten Seite angebracht sind. Die an die Grundseite 1 angrenzenden Seiten 2 und 3 schließen mit dieser jeweils einen rechten Winkel ein. Die der Grundseite 1 gegenüberliegenden Seiten 4 und 5 schließen einen Winkel kleiner als 180° ein.

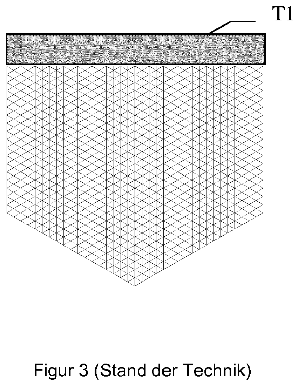

Figur 2 zeigt die Teilschallpfade S1a, S1b im Querschnitt für zwei ausgewählte Abstrahlpunkte des Schallwandlerpaars T1. Der Teilschallpfad S1a beginnt am rechten Schallwandlerrand des Schallwandlerpaars T1 und der Teilschallpfad S1b beginnt an einem Punkt in der Nähe des Schallwandlerzentrums des Schallwandlerpaars T1. Dabei wird vereinfachend angenommen, dass die Ausbreitung der Wellenfront auf parallelen Wegen erfolgt. Man erkennt, dass beide Teilschallpfade S1a, S1b äquivalente Bereiche des Fluids durchlaufen, wenn man davon ausgeht, dass das Strömungsprofil symmetrisch ist. Weiterhin durchläuft jeder der beiden Teilschallpfade S1a, S1b sowohl zentrale Bereiche als auch Randbereiche der Strömung. Näherungsweise trifft das auch für die übrigen Teilschallpfade zu. Auf allen Teilschallpfaden wird also in etwa der gleiche Messeffekt wirksam. Das Gesamtsignal ergibt sich als Summe der Teilsignale auf den einzelnen Teilschallpfaden S1a, S1b. Bei der Summierung wirkt die Schallwandleraperturfunktion als Wichtungsfaktor. Die Schallwandleraperturfunktion beschreibt die Empfindlichkeitsverteilung als Funktion des Ortes auf der Wandlerfläche. Da jedoch auf allen Teilschallpfaden der gleiche Messeffekt wirksam wird, hat die Schallwandleraperturfunktion auf den Gesamtmesseffekt bei dieser Vorrichtung keinen Einfluss. Der Messeffekt, nämlich die Schalllaufzeitänderung aufgrund der Strömung, ist also relativ unabhängig vom Strömungsprofil und der Schallwandleraperturfunktion. In Figur 3 sind die Teilschallpfade der gesamten Wellenfront des Schallwandlerpaar T1 dargestellt. Es wird die gleichmäßige Beschallung des Messrohrquerschnittes deutlich.

Es zeigt sich, dass der strömungsmechanische Kalibrierfaktor KF der Vorrichtung nach diesem Stand der Technik weitgehend, jedoch nicht vollständig, unabhängig vom Strömungsprofil sowie von der Reynoldszahl ist. Die Abhängigkeit des strömungsmechanischen Kalibrierfaktors KF von der Reynoldszahl Re auf dem Schallpfad S1 wird im Folgenden als KF1(Re) bezeichnet.

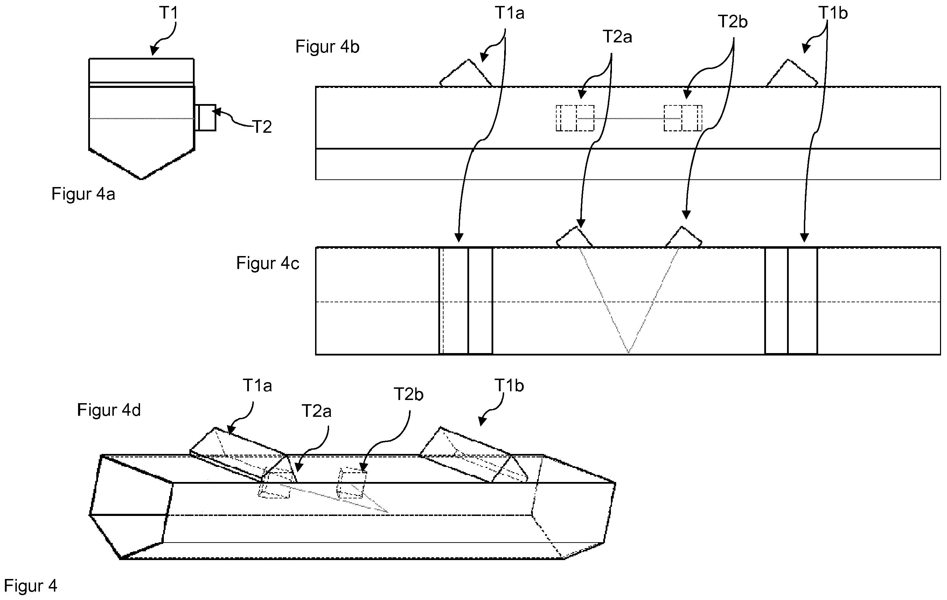

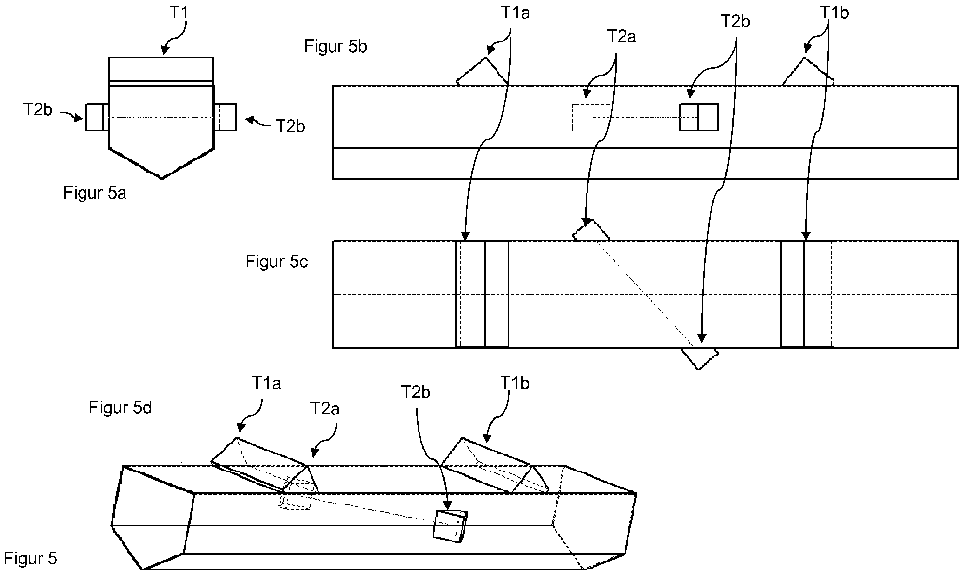

Die Figuren 4a bis 4d und 5a bis 5d zeigen die erfindungsgemäße Lösung an einem Querschnitt des Messrohres M in der Ebene des Schallwandlerpaars T2. Zusätzlich zu dem, auf der Grundseite 1 angeordneten Schallwandlerpaar T1 wird auf der angrenzenden Seiten 2 oder 3 oder auf beiden ein weiteres Schallwandlerpaar T2 angebracht. In Figur 4 ist der Querschnitt des Messrohres M in der Ebene des Schallwandlerpaars T2, bestehend aus den Schallwandlern T2a und T2b, und der Schallpfad S2 in Reflexanordnung, in die Ebene des Schallwandlerpaars T2 projiziert, dargestellt. Dabei verläuft der Schallpfad S2 von dem Schallwandler T2a zur gegenüberliegenden Seite und erreicht nach Reflexion an der Rohrinnenwand den Schallwandler T2b. Eine weitere Möglichkeit, einen Schallpfad S2 zu realisieren, wird in Figur 5 dargestellt, wo der Querschnitt des Messrohres in der Ebene des Schallwandlerpaars T2 mit den beiden Schallwandler T2a und T2b, welche auf den beiden an die Grundseite 1 angrenzenden Seiten 2, 3 angeordnet sind, und dem Schallpfad S2 in Direktanordnung zu sehen ist, in die Ebene des Schallwandlerpaars T2 projiziert. Dadurch wird zusätzlich zum Schallpfad S1 ein weiterer Schallpfad S2 realisiert. Die so realisierten Schallpfade S2 überdecken nur einen Teil des Strömungsprofils. Der auf diesen Schallpfaden wirksame strömungsmechanische Kalibrierfaktor KF2(Re) ist, im Gegensatz zu dem auf dem Schallpfad S1 wirksamen Kalibrierfaktor, insbesondere im Übergangsbereich zwischen laminarer und turbulenter Strömung stark von der Reynoldszahl Re abhängig.

Die erfindungsgemäße Anordnung mit den beiden Schallpfaden S1 und S2 ist in der Lage, die auf dem Schallpfad S1 verbleibende Reynoldszahlenabhängigkeit zu korrigieren. Dazu wird in einem Messumformer der Zusammenhang zwischen dem Kalibrierfaktor KF1 und dem Verhältnis K_VL der mit den beiden Schallpfaden S1, S2 gemessenen mittleren Strömungsgeschwindigkeiten VL1, VL2 (mittlere Strömungsgeschwindigkeit VL auf dem Schallpfad entspricht der Pfadgeschwindigkeit) im Rechenwerk des Messumformers hinterlegt. Dies kann in Form einer Tabelle der Wertepaare erfolgen. Günstiger ist es, den Zusammenhang mit einer Funktion KF1(K_VL) zu approximieren.

Die auf dem ersten Schallpfad S1 ermittelte mittlere erste Strömungsgeschwindigkeit VL1 stellt annähernd einen Flächenmittelwert des Strömungsprofils dar und ist damit von der Reynoldszahl Re und Profilunsymmetrien weitgehend unabhängig. Als zweiter Schallpfad S2 wird vorzugsweise ein zentraler Messpfad verwendet. Dieser wird weit weniger von Profilunsymmetrien beeinflusst als dezentrale Messpfade. Daher benötigt die Anordnung kein symmetrisches Profil am Eingang des Messrohres.

Der strömungsmechanischen Kalibrierfaktor KF1 wird aus dem Verhältnis K_VL der auf dem ersten und zweiten Schallpfad S1, S2 ermittelten mittleren Strömungsgeschwindigkeiten VL1, VL2 approximiert.

$$K\_VL = VL1/VL2 \qquad\qquad \text{Gl. (4)}$$

Dazu wird im Messumformer der Zusammenhang zwischen strömungsmechanischen Kalibrierfaktor KF1 und dem Verhältnis K_VL hinterlegt, entweder als Tabelle der Wertepaare oder mit einer Funktion KF1(K_VL).

Aus dem Verhältnis K_VL kann außerdem die Reynoldszahl Re bestimmt werden. Dazu wird im Messumformer der Zusammenhang zwischen der Reyanoldszahl Re und dem Verhältnis K_VL hinterlegt, entweder als Tabelle der Wertepaare oder mit einer Funktion Re(K_VL).

Aus der Reynoldszahl Re kann auch die Viskosität vis über die Beziehung

$$vis = VA * Di / Re \qquad\qquad \text{Gl. (5)}$$

berechnet werden. Dabei ist Di der äquivalente Innendurchmesser des Messrohres, der aus dem Querschnitt A des Messrohres berechnet wird.

$$Di = Wurzel(4*A/Pi)$$

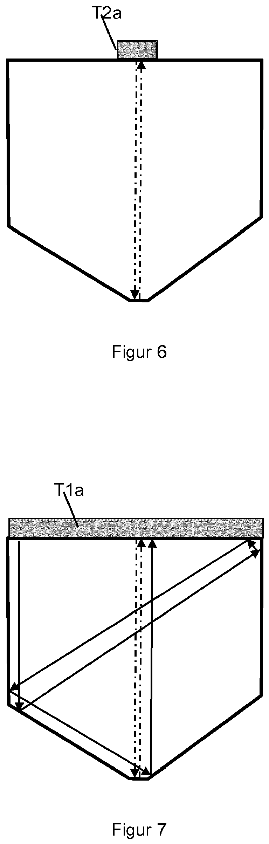

In Figur 6 wird eine weitere vorteilhafte Möglichkeit gezeigt, den Schallpfad S2 zu realisieren. Dazu ist die der Grundseite 1 gegenüberliegende Ecke zwischen den der Grundseite 1 gegenüberliegenden Seiten 4, 5 leicht abgeflacht ausgeführt, um als Reflektor 6 zu dienen. Ein auf der Grundseite 1 des Messrohres M angebrachtes Schallwandlerpaar T2 überträgt den Schall von der Grundseite 1 zum Reflektor 6 und zurück zur Grundseite 1.

Besonders einfach und entsprechend kostengünstig ist eine Anordnung nach Figur 7. Das Schallwandlerpaar T1 auf der Grundseite 1 realisiert sowohl den Schallpfad S1 als auch den Schallpfad S2. Ein Teil des von dem Schallwandlerpaar T1 gesendeten Schalls verläuft auf dem Schallpfad S1 während ein kleinerer Teil auf dem Schallpfad S2 verläuft. Das Signal auf dem Schallpfad S2 erreicht den Empfangswandler wegen der kürzeren Schallpfadlänge deutlich eher als das Signal auf dem Schallpfad S1, sodass beide Signale voneinander unterscheidbar sind.

VL - mittlere Strömungsgeschwindigkeit auf dem Schallpfad = VL - Pfadmittelwert

S1, S2, S - Schallpfad = alles vom Sender zum Empfänger

Δ t - Differenz der Laufzeiten

tl - Laufzeitanteil im Fluid

Ka - werkseitig bestimmte Sensorkonstante

Q - Durchfluss

A - Querschnittsfläche des Rohres

KF - strömungsmechanischer Kalibrierfaktor

KF1 - strömungsmechanischer Kalibrierfaktor auf Schallpfad 1

VA - Flächenmittelwert der Strömungsgeschwindigkeit, VA - Strömungsgeschwindigkeit

Re - Reynoldszahl

KF1(Re) - Abhängigkeit des strömungsmechanischen Kalibrierfaktors KF von der Reynoldszahl Re auf dem Schallpfad S1

KF2(Re) - wirksame strömungsmechanische Kalibrierfaktor von der Reynoldszahl auf dem Schallpfad S2 abhängig

K_VL - Verhältnis

vis - Viskosität

M - Messrohr

T1 - erstes Schallwandlerpaar (Stand der Technik)

T1a - Schallwandler a des ersten Schallwandlerpaars T1

T1b - Schallwandler b des ersten Schallwandlerpaars T1

T2 - zweites Schallwandlerpaar
T2a - Schallwandler a des zweiten Schallwandlerpaars T2
T2b - Schallwandler b des zweiten Schallwandlerpaars T2
P Schallwandler Erfindung
S1 - Schallpfad des Schallwandlerpaars T1
S2 - Schallpfad des Schallwandlerpaars T2

1    Grundseite
2, 3    an die Grundseite 1 angrenzenden Seiten
4, 5    der Grundseite 1 gegenüberliegenden Seiten
6    Reflektor


**Patentansprüche**

1.  Vorrichtung zur Ultraschall-Durchflussmessung mit wenigstens einem ersten Schallwandlerpaar (T1), das jeweils aus einem im Sendebetrieb und einem im Empfangsbetrieb arbeitenden Clamp-on-Ultraschallwandler besteht, wobei der Querschnitt eines von einem gasförmigen oder flüssigen Medium durchströmten Messrohres (M) im Wesentlichen ein Fünfeck ist mit einer Grundseite (1) und mit jeweils im rechten Winkel angrenzenden Seiten (2, 3) sowie daran angrenzende, der Grundseite gegenüberliegende Seiten (4, 5), welche einen Winkel kleiner als 180° einschließen, wobei das wenigstens eine erste Schallwandlerpaar (T1) auf der Grundseite (1) zur Erzeugung erster Schallpfade (S1) angeordnet ist, **dadurch gekennzeichnet, dass** wenigstens ein zweites Schallwandlerpaar (T2) angeordnet ist, wodurch ein oder mehrere zusätzliche Schallpfade (S2) erzeugt werden.

2.  Vorrichtung nach Anspruch 1 **dadurch gekennzeichnet, dass** das wenigstens zweite Schallwandlerpaar (T2) auf einer oder beiden der an die Grundseite (1) angrenzenden Seiten (2, 3) angeordnet ist.

3.  Vorrichtung zur Ultraschall-Durchflussmessung mit wenigstens einem ersten Schallwandlerpaar (T1), das jeweils aus einem im Sendebetrieb und einem im Empfangsbetrieb arbeitenden Clamp-on-Ultraschallwandler besteht, wobei der Querschnitt eines von einem gasförmigen oder flüssigen Medium durchströmten Messrohres (M) im Wesentlichen ein Fünfeck ist mit einer Grundseite (1) und mit jeweils im rechten Winkel angrenzenden Seiten (2, 3) sowie daran angrenzende, der Grundseite gegenüberliegende Seiten (4, 5), welche einen Winkel kleiner als 180° einschließen, wobei das wenigstens eine erste Schallwandlerpaar (T1) auf der Grundseite (1) zur Erzeugung erster Schallpfade (S1) angeordnet ist, **dadurch gekennzeichnet, dass** eine der Grundseite (1) gegenüberliegende Ecke zwischen den der Grundseite (1) gegenüberliegenden Seiten (4, 5) abgeflacht ist und einen Reflektor (6) darstellt, so dass das Schallwandlerpaar (T1), das den ersten Schallpfad (S1) realisiert auch einen zweiten Schallpfad (S2) realisiert, welcher zwischen den Schallwandlern auf der Grundseite und der abgeflachten Ecke verläuft.

4.  Vorrichtung nach Anspruch 3 **dadurch gekennzeichnet, dass** wenigstens ein zweites Schallwandlerpaar (T2) auf der Grundseite (1) angeordnet ist und dem Reflektor (6) gegenüber liegt.

5.  Verfahren zur Ultraschall-Durchflussmessung mit wenigstens einem ersten Schallwandlerpaar (T1), das jeweils aus einem im Sendebetrieb und einem im Empfangsbetrieb arbeitenden Clamp-on-Ultraschallwandler besteht, wobei der Querschnitt eines von einem gasförmigen oder flüssigen Medium durchströmten Messrohres (M) im Wesentlichen ein Fünfeck ist mit einer Grundseite (1) und mit jeweils im rechten Winkel angrenzenden Seiten (2, 3) sowie daran angrenzende, der Grundseite gegenüberliegende Seiten (4, 5), welche einen Winkel kleiner als 180° einschließen, wobei das wenigstens eine erste Schallwandlerpaar (T1) auf der Grundseite (1) zur Erzeugung erster Schallpfade (S1) angeordnet ist, **dadurch gekennzeichnet, dass** ein oder mehrere zusätzliche Schallpfade (S2) durch wenigstens ein zweites Schallwandlerpaar (T2) erzeugt werden, und eine Funktion $F\_Re(K\_VL)$ im Rechenwerk des Messumformers hinterlegt ist, welche eine Reynoldszahl (Re) in Abhängigkeit vom Verhältnis $K\_VL$ einer auf dem ersten Schallpfad (S1) ermittelten mittleren ersten Strömungsgeschwindigkeit (VL1) zu einer auf dem zweiten Schallpfad (S2) ermittelten mittleren zweiten Strömungsgeschwindigkeit (VL2) darstellt.

6.  Verfahren nach Anspruch 5 **dadurch gekennzeichnet, dass** für den ersten Schallpfad (S1) eine Funktion KF1(Re) hinterlegt ist, die ein Verhältnis eines Flächenmittelwertes einer Strömung im Messrohr (M) zur auf dem ersten Schallpfad (S1) ermittelten Strömungsgeschwindigkeit (VL1) in Abhängigkeit von der Reynoldszahl (Re) darstellt.

7.  Verfahren nach Anspruch 6 **dadurch gekennzeichnet, dass** ein Algorithmus implementiert ist, welcher mit einer Funktion F_Re(K_VL) aus den auf dem ersten und zweiten Schallpfad ermittelten Strömungsgeschwindigkeiten (VL1, VL2) die Reynoldszahl (Re) berechnet und damit einen strömungsmechanischen Kalibrierfaktor KF1(Re) und einen Durchfluss (Q) aus Q = KF1*A*VI berechnet.

8. Verfahren nach Anspruch 5 **dadurch gekennzeichnet, dass** über eine Funktion vis = VA * Di /Re aus der Reynoldszahl (Re) eine Viskosität (vis) berechnet wird.

9. Verfahren zur Ultraschall-Durchflussmessung mit wenigstens einem ersten Schallwandlerpaar (T1), das jeweils aus einem im Sendebetrieb und einem im Empfangsbetrieb arbeitenden Clamp-on-Ultraschallwandler besteht, wobei der Querschnitt eines von einem gasförmigen oder flüssigen Medium durchströmten Messrohres (M) im Wesentlichen ein Fünfeck ist mit einer Grundseite (1) und mit jeweils im rechten Winkel angrenzenden Seiten (2, 3) sowie daran angrenzende, der Grundseite gegenüberliegende Seiten (4, 5), welche einen Winkel kleiner als 180° einschließen, wobei das wenigstens eine erste Schallwandlerpaar (T1) auf der Grundseite (1) zur Erzeugung erster Schallpfade (S1) angeordnet ist, **dadurch gekennzeichnet, dass** ein oder mehrere zusätzliche Schallpfade (S2) durch wenigstens ein zweites Schallwandlerpaar (T2) erzeugt werden, und eine Funktion KF1(K_VL) im Rechenwerk des Messumformers hinterlegt ist, welche den strömungsmechanischen Kalibrierfaktor (KF1) in Abhängigkeit vom Verhältnis (K_VL) der auf dem ersten Schallpfad (S1) ermittelten ersten Strömungsgeschwindigkeit (VL1) zu der auf dem zweiten Schallpfad (S2) ermittelten zweiten Strömungsgeschwindigkeit (VL2) darstellt.

10. Verfahren nach Anspruch 9, **dadurch gekennzeichnet, dass** ein Algorithmus mit der Funktion KF1(K_VL) aus den auf dem ersten und zweiten Schallpfad (S1, S2) ermittelten Strömungsgeschwindigkeiten (VL1, VL2) den strömungsmechanischen Kalibrierfaktor (KF1) berechnet und den Durchfluss (Q) als Q = KF1*A*VI berechnet.

T1a          T1b

Figur 1 (Stand der Technik)

T1

Figur 2 (Stand der Technik)

Figur 3 (Stand der Technik)

T1

T2

Figur 4a

Figur 4b

T1a

T2a

T2b

T1b

Figur 4c

T1a

T2a

T2b

T1b

Figur 4d

Figur 4

EP 3 418 697 A1

Figur 5b

Figur 5c

Figur 5a

Figur 5d

Figur 5

T2a

Figur 6

T1a

Figur 7

Europäisches
Patentamt

European
Patent Office

Office européen
des brevets

# EUROPÄISCHER RECHERCHENBERICHT

Nummer der Anmeldung

EP 17 17 7639

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | DE 198 08 642 C1 (FLEXIM FLEXIBLE INDUSTRIEMESTE [DE]) 26. August 1999 (1999-08-26) | 1,2 | INV. G01F1/66 |
| Y | * Abbildungen 1, 2, 5-7 * * Spalte 1, Zeile 3 - Zeile 4 * * Spalte 1, Zeile 52 - Zeile 54 * * Spalte 3, Zeile 8 - Zeile 10 * ----- | 3-10 | ADD. G01F25/00 |
| Y | WO 2016/144585 A1 (HONEYWELL INT INC [US]) 15. September 2016 (2016-09-15) * Absatz [0008] * ----- | 3,4 | |
| Y | WO 97/19326 A1 (KROHNE AG [CH]; ROSKAM ABRAM KLAAS [NL]; BEKKUM JAN AART VAN [NL]; SMY) 29. Mai 1997 (1997-05-29) * Seite 11, erster und zweiter Absatz * ----- | 5-8 | |
| Y | DE 10 2008 055164 A1 (FLOWTEC AG [CH]) 1. Juli 2010 (2010-07-01) * Absätze [0055], [0067] - [0070] * ----- | 9,10 | |
| A | | 5-8 | |
| A | EP 2 228 631 A1 (GE INFRASTRUCTURE SENSING INC [US]) 15. September 2010 (2010-09-15) * Absätze [0028] - [0032] * ----- | 9,10 | RECHERCHIERTE SACHGEBIETE (IPC) G01F |
| A | US 6 494 105 B1 (GALLAGHER JAMES E [US]) 17. Dezember 2002 (2002-12-17) * Spalte 6, Zeile 21 - Zeile 28 * ----- | 9,10 | |
| A | EP 1 255 094 A2 (SIEMENS AG [DE]) 6. November 2002 (2002-11-06) * Abbildung 2 * ----- | 1-10 | |

Der vorliegende Recherchenbericht wurde für alle Patentansprüche erstellt

| Recherchenort | Abschlußdatum der Recherche | Prüfer |
|---|---|---|
| Den Haag | 5. Dezember 2017 | Nierhaus, Thomas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

............................................................

& : Mitglied der gleichen Patentfamilie, übereinstimmendes Dokument

EPO FORM 1503 03.82 (P04C03)

Europäisches
Patentamt

European
Patent Office

Office européen
des brevets

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

☐ Alle weiteren Recherchengebühren wurden innerhalb der gesetzten Frist entrichtet. Der vorliegende europäische Recherchenbericht wurde für alle Patentansprüche erstellt.

☒ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

**MANGELNDE EINHEITLICHKEIT
DER ERFINDUNG
ERGÄNZUNGSBLATT B**

**Nummer der Anmeldung**

EP 17 17 7639

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

**ANHANG ZUM EUROPÄISCHEN RECHERCHENBERICHT
ÜBER DIE EUROPÄISCHE PATENTANMELDUNG NR.**

EP 17 17 7639

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-12-2017

| Im Recherchenbericht angeführtes Patentdokument | Datum der Veröffentlichung | Mitglied(er) der Patentfamilie | Datum der Veröffentlichung |
|---|---|---|---|
| DE 19808642 C1 | 26-08-1999 | KEINE | |
| WO 2016144585 A1 | 15-09-2016 | US 2016265954 A1<br>WO 2016144585 A1 | 15-09-2016<br>15-09-2016 |
| WO 9719326 A1 | 29-05-1997 | AU 7693196 A<br>CA 2209789 A1<br>DE 59609187 D1<br>DK 0804717 T3<br>EP 0804717 A1<br>JP 3478833 B2<br>JP H10512966 A<br>JP 2002013957 A<br>NL 1001719 C2<br>NO 973364 A<br>US 5987997 A<br>WO 9719326 A1 | 11-06-1997<br>29-05-1997<br>13-06-2002<br>05-08-2002<br>05-11-1997<br>15-12-2003<br>08-12-1998<br>18-01-2002<br>23-05-1997<br>22-09-1997<br>23-11-1999<br>29-05-1997 |
| DE 102008055164 A1 | 01-07-2010 | DE 102008055164 A1<br>EP 2370793 A1<br>US 2011271770 A1<br>WO 2010076151 A1 | 01-07-2010<br>05-10-2011<br>10-11-2011<br>08-07-2010 |
| EP 2228631 A1 | 15-09-2010 | CN 101839736 A<br>EP 2228631 A1<br>US 2010229654 A1 | 22-09-2010<br>15-09-2010<br>16-09-2010 |
| US 6494105 B1 | 17-12-2002 | CA 2307727 A1<br>US 6494105 B1<br>US 2003131667 A1 | 07-11-2000<br>17-12-2002<br>17-07-2003 |
| EP 1255094 A2 | 06-11-2002 | DK 1255094 T3<br>EP 1255094 A2 | 26-07-2010<br>06-11-2002 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19808642 C1

- US 2015260558 A1